# EUROPEAN PATENT APPLICATION

(11) **EP 1 475 422 A1**
(43) Date of publication of application: **10.11.2004**
(21) Application number: 03705229.7
(22) Date of filing: 17.02.2003
(51) Int. Cl.: C09D 163/00

(54) **SOLUTION TYPE COATINGS**

(30) Priority: 15.02.2002 JP 2002038662
(71) Applicant: Kyowa Hakko Chemical Co., Ltd., Tokyo 103-0022 (JP); Dupont Shinto Automotive Systems Co., Ltd., Tokyo 136-8611 (JP)
(72) Inventor: MURATA, Shigeru, Yokkaichi-shi, Mie 510-0022 (JP); MURAYAMA, Toshikazu, Yokkaichi-shi, Mie 510-0022 (JP); GOTO, Makoto, Chiyoda-ku, Tokyo 100-8185 (JP); SEO, Takuto, Yachiyo-shi, Chiba 276-0046 (JP)
(74) Representative: Casalonga, Axel
(86) International application number: PCT/JP2003/001637
(87) International publication number: WO 2003/068877

(57) **Abstract**

An object of the present invention is to provide a solution-type paint excellent in acid resistance or the like. Specifically, the present invention provides a solution-type paint comprising a polymer having an epoxy group and branched glutaric acid, a coating film obtained by curing the solution-type paint, a composition comprising a polyether having an epoxy group, a polyester having an epoxy group or a polyether/polyester (a polymer having an ether linkage and an ester linkage in a molecule) having an epoxy group and branched glutaric acid, and the like. Examples of the polymer having an epoxy group include a vinyl copolymer having an epoxy group, and examples of the branched glutaric acid include 2,4-dialkylglutaric acid.

## Description

### Technical Field

The present invention relates to a solution-type paint which is useful as an automobile paint or the like.

### Background Art

High quality in appearance and high durability are required for an automobile paint, in particular, for a topcoating paint. Further, from a viewpoint of recent environmental problems, excellent acid resistance to acid rain is also demanded for an automobile paint.

As a paint excellent in acid resistance, for example, a paint comprising a polymer having an epoxy group and a polybasic acid has been previously used. For example, Japan Published Unexamined Patent Application No. 509696/1997 discloses a liquid paint composition containing a compound having at least two carboxyl groups, a compound having at least two epoxy groups and an onium salt. However, a paint using azelaic acid as a polybasic acid disclosed in Examples in Japan Published Unexamined Patent Application No. 509696/1997 does not satisfy high acid resistance required in a recent automobile paint market, and a paint having higher acid resistance is demanded.

### Disclosure of the Invention

An object of the present invention is to provide a solution-type paint excellent in acid resistance or the like.

The present invention provides the following [1] to [10] :
[1] A solution-type paint, which comprises a polymer having an epoxy group and branched glutaric acid.
[2] The solution-type paint according to [1], wherein the polymer having an epoxy group is a vinyl copolymer having an epoxy group.
[3] The solution-type paint according to [1] or [2], wherein the branched glutaric acid is 2,4-dialkylglutaric acid.
[4] The solution-type paint according to any one of [1] to [3], wherein a number average molecular weight of the polymer having an epoxy group is 500 to 15,000.
[5] The solution-type paint according to any one of [1] to [4], which contains dicarboxylic acid(s) including the branched glutaric acid in an amount of 0.5 to 3 equivalents (mol ratio) relative to an epoxy group in the polymer having an epoxy group.
[6] The solution-type paint according to any one of [1] to [5], which contains an organic solvent.
[7] The solution-type paint according to any one of [1] to [6], which contains a polyol having two or more hydroxy groups in one molecule.
[8] A coating film obtained by curing the solution-type paint as defined in any one of [1] to [7].
[9] A composition, which comprises a polyether having an epoxy group, a polyester having an epoxy group or a polyether/polyester (a polymer having an ether linkage and an ester linkage in a molecule) having an epoxy group and branched glutaric acid.
[10] An automobile, which is coated with the solution-type paint as defined in any one of [1] to [7].

### (1)Regarding a polymer having an epoxy group:

Examples of the polymer having an epoxy group include a vinyl polymer (including a homopolymer and a copolymer), a polyether, a polyester and a polyether/polyester. *Inter alia*, a vinyl polymer is preferred, and a vinyl copolymer is more preferred.

### (1-1) Regarding vinyl copolymer having an epoxy group:

The vinyl copolymer having an epoxy group (hereinafter, simply referred to as copolymer in some cases) can be prepared, for example, by a method of copolymerizing a vinyl monomer having an epoxy group (hereinafter, referred to as vinyl monomer A in some cases) with one or more other copolymerizable vinyl monomer(s) (hereinafter, referred to as vinyl monomer B in some cases), or a method of introducing an epoxy group by modifying a vinyl copolymer containing no epoxy group. Examples of the latter method include a method of first synthesizing a vinyl copolymer having an isocyanate group in a molecule and, then, reacting the copolymer with glycidol, and a method of subjecting a vinyl copolymer obtained by copolymerizing a vinyl monomer having a glyceryl carbonate group in a molecule, to a decarbonizing reaction. Alternatively, a copolymer obtained by copolymerizing a vinyl monomer A and a vinyl monomer B may be modified as necessary. Among them, a method of copolymerizing a vinyl monomer A and a vinyl monomer B is a simple and preferred method (hereinafter, a copolymer obtained by copolymerizing a vinyl monomer A and a vinyl monomer B or a copolymer obtained by modifying this copolymer is referred to as copolymer A in some cases).

Examples of the vinyl monomer A include glycidyl esters of (meth)acrylic acid such as glycidyl (meth)acrylate and β-methylglycidyl (meth)acrylate, allyl glycidyl ethers such as allyl glycidyl ether and allyl (methylglycidyl) ether, and alicyclic epoxy group-containing vinyl monomers such as 3,4-epoxycylohexyl (meth)acrylate, and 3,4-epoxy-1-vinylcyclohexane. Herein, (meth)acrylic acid means methacrylic acid or acrylic acid, and other (meth)acrylic acid derivatives have similar meanings.

The vinyl monomer B is not particularly limited as far as it is copolymerizable with the vinyl monomer A, but examples include (meth)acrylic acid esters such as methyl (meth) acrylate, ethyl (meth)acrylate, butyl (meth)acrylate, cyclohexyl (meth)acrylate, and benzyl (meth)acrylate, hydroxy group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, and polypropylene glycol mono(meth)acrylate, (meth)acrylates obtained by adding ε-caprolactone to the aforementioned various hydroxy group-containing (meth)acrylates, vinyl monomers containing a carboxyl group such as (meth)acrylic acid, crotonic acid, itaconic acid, maleic acid and fumaric acid, mono- or diesters of the aforementioned carboxyl group-containing vinyl monomer and monoalkyl alcohol, amino group-containing amide-based vinyl monomers such as *N*-dimethylaminoethyl(meth)acrylamide, *N*-diethylaminoethyl (meth) acrylamide, *N*-dimethylaminopropyl(meth)acrylamide, and *N*-diethylaminopropyl(meth)acrylamide, dialkylaminoalkyl(meth)acrylates such as dimethylaminoethyl(meth)acrylate, and diethylaminoethyl(meth)acrylate, amino group-containing vinyl monomers such as tert-butylaminoethyl (meth)acrylate, tert-butylaminopropyl (meth)acrylate, aziridinylethyl (meth)acrylate, pyrrolidinylethyl (meth)acrylate, and piperidinoethyl (meth)acrylate, α-olefins such as ethylene, propylene, and 1-butene, halogenated olefins such as vinyl chloride, and vinylidene chloride, aromatic vinyl compounds such as styrene, α-methylstyrene, and vinyltoluene, hydrolyzable silyl group-containing vinyl monomers such as γ-(meth) acryloyloxypropyltrimethoxysilane, γ-(meth) acryloyloxypropyltriethoxysilane, and γ-(meth)acryloyloxypropylmethyldimethoxysilane, fluorine-containing α-olefins such as vinyl fluoride, vinylidene fluoride, trifluoroethylene, tetrafluoroethylene, chlorotrifluoroethylene, bromotrifluoroethylene, pentafluoropropylene, and hexafluoropropylene, perfluoroalkyl perfluorovinyl ethers or (per)fluoroalkyl vinyl ethers such as trifluoromethyl trifluorovinyl ether, pentafluoroethyl trifluorovinyl ether, and heptafluoropropyl trifluorovinyl ether [provided that, in perfluoroalkyl perfluorovinyl ethers or (per)fluoroalkyl vinyl ethers, it is preferred that the alkyl portion has 1 to 18 carbon atoms], aliphatic vinyl carboxylates such as vinyl acetate, vinyl propionate, vinyl butyrate, vinyl isobutyrate, vinyl caproate, vinyl caprylate, vinyl caprate, vinyl laurate, branched aliphatic vinyl carboxylate having 5 to 20 carbon atoms, and vinyl stearate, and vinyl esters of various carboxylic acids having a cyclic structure such as vinyl cyclohexanecarboxylate, vinyl methylcyclohexanecarboxylate, vinyl benzoate, and vinyl *p*-(*tert*-butyl)benzoate.

An amount of the vinyl monomer A to be used is preferably such that an epoxy equivalent of the vinyl copolymer is 200 to 1000 g/equivalent, more preferably 300 to 600 g/equivalent.

When the vinyl monomer A and the vinyl monomer B is copolymerized in preparation of a copolymer, a polymerization initiator and a chain transfer agent may be used.

Examples of the polymerization initiator include azo compounds such as 2,2'-azobisisobutyronitrile, 2,2'-azobis-2-methylbutyronitrile, 2,2'-azobis-2,4-dimethylvaleronitrile, 1,1'-azobis-1-cyclohexanecarbonitrile, dimethyl-2,2'-azobisisobutyrate, 4,4'-azobis-4-cyanovaleric acid, 2,2'-azobis(2-amidinopropene) dihydrochloride, 2-(*tert*-butylazo)-2-cyanopropane, 2,2'-azobis(2-methylpropionamide) dihydrate, and 2,2'-azobis(2,4,4-trimethylpentane), peroxyesters such as *tert*-butyl peroxyneodecanoate, *tert*-butyl peroxypivalate, *tert*-butyl peroxy-2-ethylhexanoate, *tert*-butyl peroxyisobutyrate, *tert*-butyl peroxylaurate, *tert*-butyl peroxyisophthalate, *tert*-butyl peroxyacetate, *tert*-butyl peroxyoctoate, and *tert*-butyl peroxybenzoate, diacyl peroxides such as benzoyl peroxide, hydroperoxides such as cumene hydroperoxide, methyl ethyl ketone peroxide, potassium persulfate, 1,1-bis(*tert*-butylperoxy)-3,3,5-trimethylcyclohexane, dialkylperoxides, peroxydicarbonates and hydrogen peroxide.

It is preferred that the polymerization initiator is used at 0.01 to 10% by weight relative to a total monomer.

Examples of the chain transfer agent include dodecyl mercaptan, lauryl mercaptan, thioglycholic acid ester, mercaptoethanol, and α-methylstyrene dimer.

It is preferred that the chain transfer agent is used at 0.01 to 10% by weight relative to a total monomer.

The copolymer A is preferably prepared by a solution radical polymerization method. In the solution radical polymerization method, solvents such as benzene, toluene, xylene, hexane, cyclohexane, ethyl acetate, butyl acetate, acetone, methyl ethyl ketone, methyl isobutyl ketone, diisobutyl ketone, cyclohexanone, methanol, ethanol, propanol, isopropyl alcohol, butanol, *N*-methylpyrrolidone, tetrahydrofuran, acetonitrile, methoxybutanol, methoxybutyl acetate, 3-methyl-3-methoxybutanol, ethylene glycol monobutyl ether, ethylene glycol monobutyl ether acetate, diethylene glycol monobutyl ether, diethylene glycol monobutyl ether acetate, propylene glycol monomethyl ether, dipropylene glycol monomethyl ether, propylene glycol monoehtyl ether, propylene glycol monomethyl ether acetate, dipropylene glycol monomethyl ether acetate, 3-methyl-3-methoxy butyl acetate, water, dimethylformamide, dimethylacetamide, and dimethyl sulfoxide can be used.

An amount of the solvent to be used is not particularly limited, but the solvent is generally used at a 0.2 to 100-fold amount (weight) relative to the total monomer. A polymerization reaction is performed generally at a temperature of 10 °C to a boiling point of the solvent.

### (1-2) Vinyl homopolymer having epoxy group

The vinyl homopolymer having an epoxy group can be obtained by polymerizing a raw material such as the vinyl monomer A by the aforementioned process for the copolymer A.

### (1-3) Polyether, polyester, polyether/polyester having an epoxy group

Examples of the polyether having an epoxy group include compounds having a structure such as a polyoxyalkylene structure, a bisphenol structure, a biphenol structure, or an aliphatic or alicyclic glycol residue in a molecule, and having an epoxy group at its end.

Examples of the polyester having an epoxy group include polyesters obtained by using polyglycidyl ester (diglycidyl ether of 1-hydroxy-2,3-epoxypropane, or bisphenol A) as a raw material, bis(2,3-epoxypropyl ester) phthalate, bis(2,3-epoxypropyl ester) terephthalate, polyesters obtained by reacting bisphenol A, or diglycidyl ether having a hydroxy group with a polybasic acid such as trimellitic anhydride, and compounds obtained by reacting a polybasic acid such as phthalic acid with glycol such as neopentyl glycol to obtain a polyester, which is further reacted with epichlorohydrin of diglycidyl ether or bisphenol A.

Examples of the polyether/polyester having an epoxy group include compounds obtained by reacting phthalic acid with polyalkylene glycol to obtain polyether/ester, which is reacted with epichlorohydrin, 1-hydoxy-2,3-epoxypropane or diglycidyl ether of bisphenol A.

The polyether, the polyester and the polyether/polyester having an epoxy group can be prepared by the known method (Japan Published Unexamined Patent Application No. 509696/1997) or a similar method.

### (1-4) Number average molecular weight of polymer having epoxy group

A number average molecular weight of the polymer having an epoxy group is not particularly limited, but is preferably 500 to 15,000, more preferably 1,500 to 10,000, further preferably 2,000 to 5,000. When the number average molecular weight is larger than 500, the mechanical physical property of a coating film obtained from the solution-type paint of the present invention is improved and, when the number average molecular weight is smaller than 15,000, smoothness of the coating film is improved. An epoxy equivalent of the polymer having an epoxy group is preferably 200 to 1,000 g/equivalent, more preferably 300 to 600 g/equivalent.

### (2) Regarding branched glutaric acid:

Then, branched glutaric acid which is a component of the solution-type paint of the present invention is described.

As the branched glutaric acid, glutaric acid having one to plural alkyl side chain(s) is preferred. Examples of the alkyl in this case include straight or branched alkyls having 1 to 8 carbon atoms, and specific examples include methyl, ethyl, propyl, isopropyl, butyl, isobutyl, sec-butyl, *tert*-butyl, pentyl, isoamyl, neopentyl, 2-pentyl, 3-pentyl, hexyl, heptyl and octyl. *Inter alia*, methyl, ethyl, propyl and isopropyl are preferred.

Preferred examples of the branched glutaric acid include 2,4-dialkylglutaric acid, 3-alkylglutaric acid, 2,3-dialkylglutaric acid. *Inter alia,* 2,4-dialkylglutaric acid is preferred, and 2,4-diethyl glutaric acid is more preferred.

Branched glutaric acid can be prepared by treating corresponding diol at preferably 200 to 320°C in the presence of an alkali such as sodium hydroxide and potassium hydroxide by the known method [*Journal of Japan Oil Chemist's Society*, vol.19, No.12, p.1087 (1970), Japan Published Unexamined Patent Application No. 72948/1994]. Many of corresponding diols as a raw material are commercially available, or may be prepared by the known method (W097/19904, Japan Published Unexamined Patent Application No. 262859/1993) or a similar method.

In the solution-type paint of the present invention, dicarboxylic acid may be used in addition to branched glutaric acid. In this case, an amount of branched glutaric acid to be used is preferably 5% by weight or above, more preferably 10% by weight or above in a total amount of dicarbxylic acid. When an amount of branched glutaric acid to be used is 5% by weight or above in a total amount of dicarboxylic acid, appearance (smoothness) and softness of the resulting coating film are superior, which is more advantageous to the film. Examples of other dicarboxylic acid which can be used jointly include dicarboxylic acid having 3 to 22 carbon atoms, and preferred examples include succinic acid, adipic acid, pimelic acid, suberic acid, azelaic acid, sebacic acid, brassilic acid, dodecandioic acid and eicosandioic acid. *Inter alia*, sebacic acid and dodecandioic acid are preferred. If necessary, tri- or more functional polycarboxylic acid (trimellitic acid, pyromellitic acid, biphenyl tetracarboxylic acid, benzophenone tetracarboxylic acid etc.) may be used, and an amount of the polycarboxylic acid to be used is preferably 0.1 to 10% by weight relative to a total amount of dicarboxylic acid.

An amount of branched glutaric acid to be used is preferably 0.5 to 3 equivalents (mol ratio) relative to an epoxy group in a polymer. When other dicarboxylic acid or tri- or more functional polycarboxylic acid is used, a total amount of dicarboxylic acid and tri- or more functional polycarboxylic acid (all polybasic acid) including branched glutaric acid is preferably 0.5 to 3 equivalents (mol ratio), more preferably 0.7 to 2.5 equivalents (mol ratio) relative to an epoxy group in a polymer.

### (3) Regarding a solution-type paint of the present invention:

The solution-type paint of the present invention can be obtained by mixing a polymer having an epoxy group and branched glutaric acid, and a mixing method thereof, an order of addition thereof and the like are not particularly limited. Upon mixing, a kneader or a roll may be used if necessary.

It is preferred that the solution-type paint of the present invention contains a polyol having two or more hydroxy groups. Examples of the polyol include straight or branched polyols having 2 to 12 carbon atoms (ethylene glycol, propylene glycol, 1,3-butylene glycol, 1,6-hexanediol, diethylene glycol, trimethylolpropane, pentaerythritol etc.), and poly(meth)acrylic acid ester or poly(meth)acrylamide obtained by polymerizing a raw material containing (meth)acrylic acid hydroxyalkyl ester, or compounds obtained by modifying them. A number average molecular weight of the poly(meth)acrylic acid ester and the poly(meth)acrylamide is preferably 1,000 to 15,000. An amount of the polyol to be used is preferably 1 to 75% by weight in the solution-type paint of the present invention. Polyols having two or more hydroxy groups may be used alone, or by mixing two or more sorts of polyols.

The solution-type paint of the present invention may contain a resin having two or more carboxyl groups. A number average molecular of the resin is preferably 500 to 15,000. An acid value of the resin is preferably 15 to 200 mgKOH/g. Examples of the resin include polymers (including homopolymer and copolymer) obtained by using (meth)acrylic acid or a derivative thereof as a raw material. An amount of the resin to be used is preferably 1 to 75% by weight, more preferably 20 to 40% by weight in a solid matter. Resins having two or more carboxyl groups may be used alone, or by mixing two or more sorts of resins.

The solution-type paint of the present invention may contain polyisocyanate having a blocked isocyanate group. Examples of the polyisocyanate include aliphatic, alicyclic and aromatic polyisocyanates, and specific examples include tetramethyl diisocyanate, hexamethylene diisocyanate, 2,2,4-trimethylene diisocyanate, 1,3-cyclohexane diisocyanate, 1,4-cyclohexane diisocyanate, isophorone diisocyanate, 2,4-tolylene diisocyanate, 2,6-tolylene diisocyanate, tetramethylxylilene diisocyanate, and modified compounds of them (adduct in which trimethylolpropane is added to polyisocyanate, biuret and isocyanurate). Polyisocyanate having a blocked isocyanate group can be obtained by reacting the polyisocyanate with the known blocking agent for an isocyanate group (e.g. dimethyl malonate, diethyl malonate, ethyl acetoacetate, ε-caprolactam, acetanilide, acetoxime, butanoxime). An amount of polyisocyanate having a blocked isocyanate group to be used is preferably 1 to 40% by weight in the solution-type paint of the present invention. Polyisocyanates having a blocked isocyanate group may be used alone, or by mixing two or more sorts of polyisocyanates.

In order to promote a reaction between a carboxyl group and an epoxy group, the solution-type paint of the present invention may contain a catalyst. Examples of the catalyst include phosphonium salt, quaternary ammonium salt, and p-toluenesulfonic acid. A used amount thereof is preferably 0.001 to 10% by weight in the solution-type paint of the present invention. The catalysts may be used alone, or by mixing two or more sorts of catalysts.

The solution-type paint of the present invention may contain an organic solvent. Examples of the organic solvent include aromatic hydrocarbons such as toluene and xylene, alcohols such as isopropyl alcohol, ketones such as methyl ethyl ketone, esters such as ethyl acetate, alcohol esters such as butyl lactate, ketone esters such as ethyl acetoacetate, ethers such as butyl ether, ketone alcohols such as diacetone alcohol, ether alcohols such as butyl cellosolve, ketone ethers, and ester ethers such as butyl acetate cellosolve. A used amount thereof is preferably 10 to 95% by weight in the solution-type paint of the present invention. Organic solvents may be used alone, or by mixing two or more sorts of organic solvents.

The solution-type paint of the present invention may contain additives such as a plasticizer, a light stabilizer, a ultraviolet absorbing agent, a stabilizer, a flowability adjusting agent, a surface adjusting agent, and a pigment if necessary. An amount of the additive is preferably 0.01 to 10% by weight in the solution-type paint of the present invention.

Coating of the solution-type paint of the present invention can be performed by using various coaters such as an air spray coater, an airless spray coater, or alternatively by a shower, an atomizer, a brush, dip coating, roller coating, or spreading with spatula.

Examples of the substrate for the solution-type paint of the present invention include wood, metal (steel, aluminum, chromium · plating, galvanized steel, tinplate), glass, fabric and plastic. These substrates may be coated with other base paint (polyester resin paint, polyurethane resin paint, acrylic resin paint: USP No.5151125, USP No.5183504) in advance. The solution-type paint of the present invention may be coated on a substrate coated with other base paint in a wet-on-wet manner.

A thickness of a coating film obtained from the solution-type paint of the present invention is not particularly limited, but is preferably 20 to 1,000 µm.

A coating film can be obtained by coating the solution-type paint of the present invention on a substrate, and curing it. Curing is performed at preferably 100 to 200°C, more preferably 120°C to 180°C.

The solution-type paint of the present invention may be formulated into high solid type.

A coating film obtained from the solution-type paint of the present invention is excellent in appearance performance (smoothness), water resistance, solvent resistance, acid resistance, hardness and mechanical physical property.

The solution-type paint of the present invention is useful in utilities such as an automobile paint (in particular topcoating paint), and coil coating paint.

The automobile of the present invention can be obtained by coating the solution-type paint on an automobile, and a coating method can be set as described above.

### Best Mode for Carrying Out the Invention

### Example 1: Preparation of paint A

Raw materials having the following formulation were mixed to obtain a paint composition A (solid matter 55%).

| | |
|---|---|
| Acrylic resin having epoxy groups (ALMATEX ART112G manufactured by Mitsui Chemicals, Inc.) | 55 parts |
| | |
| 2,4-Diethylglutaric acid (manufactured by Kyowa Hakko Kogyo Co., Ltd.) | 16 parts |
| | |
| Tinuvun292 (manufactured by Ciba Specialty Chemicals) | 0.5 parts |
| | |
| Tinuvin328 (manufactured by Ciba Specialty Chemicals) | 0.5 parts |
| | |
| *N*-methylpyrrolidone | 7 parts |
| | |
| Butanol | 4 parts |
| | |
| Solvesso#100 (an organic solvent manufactured by Exxon Mobil) | 17 parts |

### Comparative Example 1: Preparation of paint B

Raw materials having the following formulation were mixed to obtain by a paint composition B(solid matter 47%).

| | |
|---|---|
| Acrylic resin containing epoxy groups (ALMATEX ART112G manufactured by Mitsui Chemicals, Inc.) | 45 parts |
| | |
| Dodecandioic acid (manufactured by Wako Pure Chemical Industries, Ltd.) | 15 parts |
| | |
| Tinuvun292 (manufactured by Ciba Specialty Chemicals) | 0.5 parts |
| | |
| Tinuvin328 (manufactured by Ciba Specialty Chemicals) | 0.5 parts |
| | |
| *N*-methylpyrrolidone | 7 parts |
| | |
| Butanol | 5 parts |
| | |
| Solvesso#100 (an organic solvent manufactured by Exxon Mobil) | 27 parts |

### Experimental Example 1

The paint A or B was coated on a steel plate which had been coated with a multilayer coating comprising a cationic electrocoating paint, a solvent intermediate coating paint, and an aqueous base coating, to a thickness of a dry film of 40 µm, this was allowed to stand at room temperature (23 °C) and humidity of 65% for 10 minutes, and baked at 140 °C for 20 minutes to obtain a coating film for assessment.

The coating film for assessment was tested as follows:
(1) Appearance assessment: Appearance of the coating film was assessed with naked eyes. Assessment in Table 1 based on the following criteria:
   @: Excellent
   o: Fair
   Δ: Worse
   X: Failure
(2) Water resistance test: The coating film was immersed in warm water at 40°C for 240 hours, and appearance of the coating film was assessed with naked eyes. Further, a square adherability test was performed by a method according to JIS K5400.
(3) Solvent resistance test: 0.2 ml of xylene was added dropwise in a spot manner on a dry coating film, allowed to stand at room temperature for 1 hour, and appearance after wiping was assessed with naked eyes.
(4) Acid resistance test: 0.2 ml of a 40% by weight aqueous sulfuric acid solution was added dropwise in a spot manner on a dry coating film, and heated at 60°C for 30 minutes. Thereinafter, this coating film was immediately washed with water, and a trace of a spot was assessed with naked eyes.
(5) Hardness: Pencil hardness was measured according to a JIS K5400.8.4 pencil scratching test.
(6) Gel fraction: A coating film was cured at 140°C for 20 minutes, immersed in acetone for 24 hours, and a remaining rate of a weight of a coating film was measured, and ranked by the following criteria:
   @: Gel fraction 90% or larger
   o: Gel fraction not smaller than 50% and smaller than 90%
   X: Gel fraction not smaller than 50%
Results of these experiments are summarized in Table 1.

**Table 1**

| | | Test result | |
|---|---|---|---|
| Test item | | Paint A (Example 1) | Paint B (Comparative Example 1) |
| Appearance assessment | | @ | o |
| Water resistance resistance test | Appearance after water resistance test | No abnormality | No abnormality |
| | Square adherability | No peeling | No peeling |
| Solvent resistance | | No abnormality in coating film | Slight swelling |
| Acid resistance | | No spot trace | Small spot trace |
| Pencil hardness | | F | HB |
| Gel fraction(140°C curing) | | @ | o |

From Table 1, it is seen that a coating film obtained from the solution-type paint of the present invention is excellent in appearance performance, water resistance, solvent resistance, acid resistance, hardness, and mechanical physical property.

### Industrial applicability

According to the present invention, there is provided a solution-type paint excellent in acid resistance or the like.

## Claims

1. A solution-type paint, which comprises a polymer having an epoxy group and branched glutaric acid.

2. The solution-type paint according to claim 1, wherein the polymer having an epoxy group is a vinyl copolymer having an epoxy group.

3. The solution-type paint according to claim 1 or 2, wherein the branched glutaric acid is 2,4-dialkylglutaric acid.

4. The solution-type paint according to any one of claims 1 to 3, wherein a number average molecular weight of the polymer having an epoxy group is 500 to 15,000.

5. The solution-type paint according to any one of claims 1 to 4, which contains dicarboxylic acid(s) including the branched glutaric acid in an amount of 0.5 to 3 equivalents (mol ratio) relative to an epoxy group in the polymer having an epoxy group.

6. The solution-type paint according to any one of claims 1 to 5, which contains an organic solvent.

7. The solution-type paint according to any one of claims 1 to 6, which contains a polyol having two or more hydroxyl groups.

8. A coating film obtained by curing the solution-type paint as defined in any one of claims 1 to 7.

9. A composition, which comprises a polyether having an epoxy group, a polyester having an epoxy group or a polyether/polyester (a polymer having an ether linkage and an ester linkage in a molecule) having an epoxy group and branched glutaric acid.

10. An automobile, which is coated with the solution-type paint as defined in any one of claims 1 to 7.
